(19) Europäisches Patentamt
European Patent Office
Office européen des brevets

(11) **EP 2 116 702 B1**

(12) **EUROPÄISCHE PATENTSCHRIFT**

(45) Veröffentlichungstag und Bekanntmachung des Hinweises auf die Patenterteilung:
**15.06.2011 Patentblatt 2011/24**

(51) Int Cl.:
***F01N 3/20*** *(2006.01)*      ***B60K 13/04*** *(2006.01)*

(21) Anmeldenummer: **09156317.1**

(22) Anmeldetag: **26.03.2009**

(54) **Tank für ein Reduktionsmittel, Kraftfahrzeug mit einem Tank für ein Reduktionsmittel sowie ein Verfahren zum Betrieb einer SCR-Anlage eines Kraftfahrzeuges**

Tank for a reduction agent, motor vehicle with same and method for operating a SCR assembly of a motor vehicle

Réservoir pour un moyen de réduction, véhicule automobile doté d'un réservoir pour un moyen de réduction et procédé de fonctionnement d'une installation SCR d'un véhicule automobile

(84) Benannte Vertragsstaaten:
**DE ES FR GB IT**

(30) Priorität: **07.05.2008 DE 102008022515**

(43) Veröffentlichungstag der Anmeldung:
**11.11.2009 Patentblatt 2009/46**

(73) Patentinhaber: **Emitec Gesellschaft für Emissionstechnologie mbH**
**53797 Lohmar (DE)**

(72) Erfinder:
• **Hodgson, Jan**
**53840 Troisdorf (DE)**
• **Brück, Rolf**
**51429 Bergisch Gladbach (DE)**

(74) Vertreter: **Rössler, Matthias**
**KNH Patentanwälte**
**Kahlhöfer Neumann Rößler Heine**
**Postfach 10 33 63**
**40024 Düsseldorf (DE)**

(56) Entgegenhaltungen:
**EP-A- 1 388 648      DE-A1- 2 035 805**
**US-A- 2 975 797      US-A- 3 785 439**
**US-A- 6 151 907**

**Beschreibung**

Die vorliegende Erfindung betrifft einen Tank für ein Reduktionsmittel, der ein flächiges erstes Tankvolumen und mindestens ein längliches zweites Tankvolumen aufweist, ein Kraftfahrzeug mit einem Tank für ein Reduktionsmittel sowie ein Verfahren zum Betrieb einer SCR-Anlage eines Kraftfahrzeuges, die mindestens zwei Tankvolumina für ein Reduktionsmittel aufweist.

Aufgrund der gestiegenen Anforderungen an die Abgasreinigungsanlagen von Verbrennungskraftmaschinen, insbesondere von Dieselmotoren, werden in immer größerem Umfang SCR-Anlagen in den Abgassystemen von Verbrennungskraftmaschinen eingesetzt zur Reduzierung der Stickoxide in einem Abgas. Dabei gelten die in vielen Ländern nun beschlossenen Abgas- oder Emissionsvorschriften nicht nur für Straßenfahrzeuge wie PKW und LKW, sondern bereits heute oder aber in naher Zukunft auch für sogenannte Non-Road-Fahrzeuge, also z. B. für Traktoren und andere Agrarfahrzeuge.

Neben der Integration solcher SCR-Anlagen während der Entwicklungsphase von Fahrzeugen kommt insbesondere nachrüstbaren SCR-Anlagen eine große Bedeutung zu, weil die Anschaffungskosten von Non-Road-Fahrzeuge im Allgemeinen sehr hoch liegen.

Die nachträgliche Integration solcher SCR-Anlagen ist im Allgemeinen schwierig, weil die Tankinhalte für das Reduktionsmittel einer SCR-Anlage aufgrund möglichst langer Serviceintervalle und einer intensiven Nutzung der Fahrzeuge sehr groß auszulegen sind. Weiter liegen insbesondere bei Landmaschinen, z. B. bei Traktoren, viele Einschränkungen hinsichtlich des Einbauortes vor, weil der Einsehbarkeit des Frontbereiches vor der Karosserie eine große Bedeutung zukommt. Weiterhin sollten die Anlagenkomponenten einer solchen SCR-Anlage hinsichtlich ihres Gewichtes sehr leicht ausgeführt werden sowie eine geringe Komplexität im Hinblick auf Wartungsfreiheit haben. Darüber hinaus sind die Herstellungs- und Betriebskosten zu reduzieren und insbesondere so wenig wie möglich zusätzliche Energie der Verbrennungskraftmaschine oder der elektrischen Energiespeicher oder Energieerzeuger zu verbrauchen. Bei einem nachträglichen Einbau einer solchen SCR-Anlage in ein Kraftfahrzeug sollten die notwendigen Umbaumaßnahmen außerdem noch möglichst gering sein.

Das Dokument DE 20 2006 010 615 U1 zeigt ein Tanksystem zur Bereitstellung einer Harnstofflösung für einen SCR-Katalysator, wobei ein Schmelztank aus einem Haupttank mit der Harnstofflösung befüllbar ist. Der Schmelztank weist eine Heizung zur Abschmelzung gefrorener Betriebsflüssigkeit auf.

Aus den obigen Ausführungen geht hervor, dass eine Vielzahl von Erfordernissen für den (nachträglichen) Einbau von SCR-Anlagen in Kraftfahrzeugen existiert, um lange Betriebszeiten und Wartungsintervalle des Fahrzeugs zu gewährleisten sowie geringe Wartungs- und Herstellungskosten zu erzeugen.

Aufgabe der vorliegenden Erfindung ist es, die eingangs geschilderten Probleme wenigstens teilweise zu lösen und insbesondere einen Tank für ein Reduktionsmittel anzugeben, der einen nachträglichen Einbau in ein Kraftfahrzeug ermöglicht. Weiter soll ein Kraftfahrzeug angegeben werden, das die eingangs geschilderten Probleme wenigstens teilweise löst und insbesondere die Anordnung eines Tanks für ein Reduktionsmittel angibt, die hinsichtlich der Übersichtlichkeit der Karosserie des Fahrzeuges keine Einschränkungen für den Nutzer beinhaltet. Zudem soll ein Verfahren zum Betrieb einer SCR-Anlage eines Kraftfahrzeuges angegeben werden, das einen einfachen Betrieb der SCR-Anlage ermöglicht und damit hinsichtlich der Wartungs- sowie der Herstellungs- und Betriebskosten und der verbrauchten Energie deutliche Vorteile ermöglicht.

Diese Aufgaben werden gelöst durch einen Tank gemäß Anspruch 1. Vorteilhafte Ausgestaltungen und Einsatzgebiete der Erfindung sind in den jeweils abhängigen Ansprüchen angegeben. Es ist darauf hinzuweisen, dass die in den abhängig formulierten Ansprüchen einzeln aufgeführten Merkmale in beliebiger, technologisch sinnvoller Weise miteinander kombiniert werden können und weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Ein erfindungsgemäßer Tank für ein Ammoniak bildendes oder Ammoniak umfassendes Reduktionsmittel weist ein erstes flächiges Tankvolumen mit einer ersten Höhe und einer ersten mittleren Grundfläche sowie mindestens ein längliches zweites Tankvolumen mit einer zweiten Höhe und einer zweiten mittleren Grundfläche auf, wobei das mindestens eine längliche zweite Tankvolumen zu dem flächigen ersten Tankvolumen hervorstehend ausgebildet ist und weiter ein erstes Verhältnis aus erster Grundfläche und erster Höhe größer 500 cm ist, insbesondere 1000 cm oder sogar größer als 1500 cm.

Selbstverständlich ist es möglich, mit einem solchen Tank ein Reduktionsmittel zu bevorraten, das bereits Ammoniak und/oder einen Ammoniakvorläufer umfasst. Bei den hier zur Anwendung kommenden SCR-Anlagen wird als Reduktionsmittel jedoch eine wässrige Harnstofflösung bevorzugt, die z. B. auch unter der Bezeichnung AdBlue erhältlich ist. Dabei wird diese Lösung stromaufwärts eines SCR-Katalysators in den Abgasstrang eingespritzt, gesprüht oder verdampft, z. B. mittels einer Dosierpumpe oder eines Injektors. Aus der wässrigen Harnstofflösung entsteht unter Einsatz eines Katalysators (z. B. noch abgasextern) und/oder infolge des Kontaktes mit dem heißen Abgas eine Hydrolysereaktion Ammoniak ($NH_3$) und Wasser. Das so erzeugte Ammoniak kann in einem SCR-Katalysator bei entsprechender Temperatur mit den Stickoxiden des Abgases reagieren.

Der Verbrauch an wässriger Harnstofflösung beträgt dabei, abhängig von den Rohemissionen der Verbrennungskraftmaschine, etwa 1 % bis 8 % des eingesetzten Kraftstoffs (Dieselkraftstoff). Deshalb muss gerade in diesem Fall ein entsprechend großes Tankvolumen mitgeführt werden.

Der Tank ist derartig geformt, dass ein erstes Tankvolumen flächig ausgeführt ist, also bei einer geringen Höhe gleichzeitig eine vergleichsweise große Länge und/oder Breite aufweist. Die erste mittlere Grundfläche des ersten Tankvolumens ergibt sich durch die Mittelung der Tankquerschnittsfläche über die erste Höhe (also senkrecht dazu). Dabei ist die erste Höhe bevorzugt auch die größte Höhe des ersten Tankvolumens, welche bevorzugt z. B. maximal 10 cm oder sogar nur maximal 5 cm beträgt. Das längliche zweite Tankvolumen setzt sich aus dem ersten Tankvolumen unmittelbar fort, und ist mit dem ersten Tankvolumen, insbesondere unverlierbar, verbunden. Dabei weist das zweite Tankvolumen entlang seiner länglichen Erstreckung eine zweite Höhe auf, die vergleichsweise groß gegenüber der Länge und Breite des zweiten Tankvolumens ist. Die zweite mittlere Grundfläche ergibt sich analog zum ersten Tankvolumen durch die Mittelung der Tankquerschnittsfläche des zweiten Tankvolumens über die zweite Höhe. Die zweite Höhe ist dabei bevorzugt die gemittelte oder sogar die kleinste Höhe des zweiten Tankvolumens, welche bevorzugt z. B. zumindest 20 cm oder sogar zumindest 50 cm beträgt. Das zweite Tankvolumen ist insbesondere derart zu dem ersten Tankvolumen ausgebildet, dass sich die erste Höhe und die zweite Höhe und dementsprechend auch die erste und die zweite mittlere Grundfläche in jeweils nahezu derselben Richtung (parallel) erstrecken. Die erste Grundfläche beträgt bevorzugt zumindest 0,5 m² oder sogar zumindest 1 m².

Vorzugsweise ist der Tank so gestaltet, dass ein zweites Verhältnis aus zweiter mittlerer Grundfläche und zweiter Höhe kleiner als 2 cm ist, insbesondere kleiner als 1,5 cm.

Insbesondere ist das Verhältnis von zweiter Höhe (H2) zu erster Höhe (H1) größer als 3:1, also:

$$\frac{H2}{H1} > 3\,,$$ ggf. kann das Verhältnis sogar zumindest 5:1 betragen.

Bei einer Weiterbildung des Tankes wird vorgeschlagen, dass das mindestens eine zweite Tankvolumen direkt im Randbereich des ersten Tankvolumens angeordnet ist und insbesondere in einem Eckbereich des ersten Tankvolumens. Der Tank kann neben dem mindestens einen zweiten Tankvolumen auch weitere zweite Tankvolumina aufweisen, die in vorteilhafter Weise ebenso im Randbereich des ersten Tankvolumens angeordnet sind, in besonders vorteilhafter Weise in den weiteren Eckbereichen des ersten Tankvolumens.

Erfindungsgemäß weist das erste Tankvolumen zur Aufnahme des Reduktionsmittels ein erstes Volumen von wenigstens 90 1 (Liter) auf und das mindestens eine längliche zweite Tankvolumen hat ein zweites Volumen, das höchstens 10 % des ersten Volumens umfasst, und insbesondere höchstens 5 %. Sollten mehrere längliche zweite Tankvolumina vorhanden sein, ist das jeweilige Volumen der zweiten Tankvolumina insbesondere an die Anzahl der zweiten Tankvolumina anzupassen, also weisen bei zwei vorhandenen zweiten Tankvolumina die jeweiligen zweiten Volumina höchstens 5 % und bei drei vorhandenen zweiten Tankvolumina jeweils 3,3 % des ersten Volumens auf. Insbesondere sind die mehreren zweiten Tankvolumina über eine Sammelleitung direkt miteinander verbunden, so dass die in ihnen enthaltenen Flüssigkeiten untereinander austauschbar sind. Dabei sind die Sammelleitungen insbesondere an dem Ende des zweiten Tankvolumens angeschlossen, das dem ersten Tankvolumen gegenüber abgewandt angeordnet ist.

Gemäß einer weiteren vorteilhaften Weiterbildung des Tankes ist ein drittes Tankvolumen über eine Verbindungsleitung mit dem ersten Tankvolumen und/oder dem mindestens einen zweiten Tankvolumen verbunden. Dabei ist das dritte Tankvolumen in seiner Form an die räumlichen Gegebenheiten im Fahrzeug anzupassen. Sein Volumen entspricht aber insbesondere dem des mindestens einen zweiten Tankvolumens, umfasst also z. B. höchstens 10 % des ersten Volumens. Gemäß einer weiteren vorteilhaften Ausgestaltung ist das dritte Tankvolumen wesentlich kleiner als das mindestens eine zweite Tankvolumen. Das dritte Tankvolumen weist also ein drittes Volumen auf, das insbesondere höchstens 1 % des ersten Volumens entspricht.

Erfindungsgemäß umfasst das mindestens eine zweite Tankvolumen oder auch das dritte Tankvolumen des Tankes eine Heizung. Dabei ist die Heizung insbesondere eine elektrische Heizung, die z. B. an elektrische Speicher bzw. elektrische Erzeuger eines Kraftfahrzeuges anschließbar ist. Die Heizleistung ist insbesondere automatisch nach Bedarf zuschaltbar und/oder regelbar und hinsichtlich einer maximalen Heizleistung so auszulegen, dass ein gefrorenes Reduktionsmittel mit einem Volumen von minimal 0,5 1 (Liter) innerhalb von 10 min. verflüssigt wird.

In Weiterbildung des Tankes wird vorgeschlagen, dass zumindest das erste Tankvolumen ein Gehäuse aus Kunststoff aufweist. Für Reduktionsmittel, insbesondere für eine wässrige Harnstofflösung, sind insbesondere Edelstahl- oder Kunststofftanks geeignet. In der vorliegenden Ausführungsform des Tankes ist jedoch Kunststoff bevorzugt, weil dieser ein geringeres Gewicht gegenüber der Ausführung in Edelstahl und ein gewisses Ausdehnungsvermögen aufweist. Ganz besonders bevorzugt ist hierbei ein Polyurethan als Werkstoff einzusetzen, wie z. B. ein hochdruckfester Polyurethan. Vorzugsweise weist zumindest das erste Tankvolumen des Tankes eine Wärmeisolierung auf. Diese Wärmeisolierung ist insbesondere derartig ausgeführt, dass sie nur einen Teilbereich des ersten Tankvolumens umfasst.

Die in der Einleitung definierten Aufgaben werden weiter gelöst durch ein Kraftfahrzeug mit einer Verbrennungskraftmaschine und einem Abgassystem sowie einer Karosserie mit einem Dach, wobei das Abgassystem einen SCR-Katalysator und eine Reduktionsmittelzugabeeinrichtung hat, wobei ein erfindungsgemäßer Tank mit einem flächigen ersten Tankvolumen für das Reduktionsmittel am Dach vorgesehen ist.

Die Reduktionsmittelzugabeeinrichtung umfasst z. B. einen Injektor oder eine Einspritzdüse und eine Dosierpumpe, die das Reduktionsmittel von einem Tankvolumen dem Abgassystem zuführt.

Die Karosserie des Kraftfahrzeuges umfasst alle Aufbauten des Kraftfahrzeuges und ein Dach, das über einer Fahrerkabine angeordnet ist, wobei an diesem Dach das flächige erste Tankvolumen angeordnet ist, insbesondere ohne dass ein Fahrer oder Nutzer (also mögliche weitere Personen, die sich in der Fahrerkabine aufhalten) des Kraftfahrzeuges durch das erste Tankvolumen in seiner Bewegungsfreiheit eingeschränkt wird. Insbesondere kann das erste Tankvolumen oberhalb des Daches, unterhalb des Daches oder auch innerhalb des Daches angeordnet sein. Das erste Tankvolumen kann Aussparungen oder andere Profilierungen aufweisen, die einerseits dem Aufbau des Daches und/oder der Bewegungsfreiheit des Fahrers oder des Nutzers angepasst sind. Dabei erstreckt sich der Tank vorzugsweise über nahezu der gesamten Fläche des Daches und nutzt somit durch eine möglichst große Grundfläche und eine möglichst geringe Höhe ein möglichst großes erstes Tankvolumen. Gleichwohl ist hier jede beliebige Form des ersten Tankvolumens gleichermaßen im Rahmen dieser erfindungsgemäßen Ausgestaltung des Fahrzeugs.

Vorzugsweise weist der Tank des Kraftfahrzeuges ein flächiges erstes Tankvolumen und mindestens ein längliches zweites Tankvolumen auf, wobei das mindestens eine längliche zweite Tankvolumen zu dem flächigen ersten Tankvolumen hervorstehend ausgebildet ist, wobei das mindestens eine zweite Tankvolumen entlang eines Dachholmes der Karosserie angeordnet ist. Das erste Tankvolumen ist also insbesondere dadurch gekennzeichnet, dass eine möglichst große Länge und Breite des Tankes zur Nutzung der Dachfläche und eine möglichst geringe erste Höhe vorliegen, so dass Einschränkungen des Nutzers oder des Fahrers möglichst nicht gegeben sind. Das mindestens eine längliche zweite Tankvolumen weist eine möglichst geringe Breite und Länge, aber eine große Höhe entlang der länglichen Erstreckung des zweiten Tankvolumens auf, so dass dieses mindestens eine zweite Tankvolumen entlang eines Dachholmes der Karosserie verlaufen kann. Durch eine möglichst schmale, gegebenenfalls auch profilierte, Ausführung des zweiten Tankvolumens soll erreicht werden, dass einerseits ein ausreichend großes Volumen in diesem zweiten Tankvolumen bereitgestellt wird, andererseits eine Einschränkung der Bewegungsfreiheit des Nutzers und/oder des Fahrers bzw. eine Reduzierung der Übersichtlichkeit der Karosserie des Fahrzeugs weitestgehend vermieden wird. Das zweite Tankvolumen ist dabei geodätisch (bezogen auf seine Höhenlage) unterhalb des ersten Tankvolumens anzuordnen.

So kann es beispielsweise auch möglich sein, dass das erste Tankvolumen und/oder das zweite Tankvolumen ein integrales Bauteil der Karosserie und/oder einer Fahrerkabine ist. Das gilt insbesondere für Anwendungen, bei denen der Tank bereits bei der Herstellung des Kraftfahrzeuges einbebaut wird. "Integral" bedeutet in diesem Zusammenhang insbesondere, dass ein Entfernen des ersten Tankvolumens und/oder des zweiten Tankvolumens mit einer (teilweisen) Verformung und/oder Zerstörung der Karosserie möglich ist.

Gemäß einer Weiterbildung des Kraftfahrzeuges ist vorgesehen, dass ein drittes Tankvolumen über eine Verbindungsleitung mit mindestens einem zweiten Tankvolumen oder dem ersten Tankvolumen verbunden ist, wobei zumindest das erste Tankvolumen über das dritte Tankvolumen mit einer Reduktionsmittelzugabeeinrichtung verbunden ist.

Ein zweites Tankvolumen ist hier also nicht zwingend vorzusehen. Damit wird das dritte Tankvolumen direkt aus dem ersten Tankvolumen mit dem Reduktionsmittel versorgt. Das dritte Tankvolumen ist insbesondere außerhalb der Fahrerkabine, in der Nähe der Dosierpumpe oder eines Injektors der Reduktionsmittelzugabeeinrichtung angeordnet. Insbesondere ist das dritte Tankvolumen derart angeordnet, dass die Abwärme des Motors oder der Abgasleitung als Heizleistung für das dritte Tankvolumen nutzbar ist. Dementsprechend ist das dritte Tankvolumen insbesondere wenigstens teilweise gegenüber der Umgebung wärmeisoliert, so dass ein Einfrieren des Reduktionsmittels vermieden bzw. ein Auftauen des Reduktionsmittels beschleunigt wird.

Das dritte Tankvolumen ist bevorzugt geodätisch unterhalb des mindestens einen zweiten Tankvolumens angeordnet und kann bei mehreren zweiten Tankvolumina mit diesen mehreren jeweils verbunden sein oder bevorzugt mit einer, die mehreren zweiten Tankvolumina verbindenden Sammelleitung, die bevorzugt an den, dem ersten Tankvolumen abgewandten Enden der zweiten Tankvolumina angeschlossen ist.

Das dritte Tankvolumen wird insbesondere außerhalb einer Fahrerkabine des Kraftfahrzeuges angeordnet, insbesondere in unmittelbarer Nähe einer Förderpumpe der SCR-Anlage für das Reduktionsmittel. Sollte ein drittes Tankvolumen nicht vorgesehen sein, ist das mindestens eine zweite Tankvolumen über eine (ggf. flexible, z. B. mit einem Schlauch ausgeführte) Verbindungsleitung mit einer Reduktionsmittelzugabeeinrichtung verbunden, wobei diese Verbindungsleitung auch mit einer oben bereits angesprochenen Sammelleitung der mehreren zweiten Tankvolumina verbunden sein kann.

Gemäß einer Weiterbildung des Kraftfahrzeuges ist eine Reduktionsmittelzugabeeinrichtung mit einem durch Schwerkraft befüllbaren mindestens einem zweiten Tankvolumen oder mit einem durch Schwerkraft befüllbaren dritten Tankvolumen verbunden. Die Reduktionsmittelzugabeeinrichtung umfasst dabei z. B. zumindest eine Pumpe und eine Einspritzung oder einen Injektor und wird mit dem Reduktionsmittel aus dem mindestens einen zweiten Tankvolumen oder aus dem dritten Tankvolumen versorgt. Erfindungsgemäß wird das mindestens eine zweite Tankvolumen in Folge der Schwerkraft aus dem ersten Tankvolumen mit Reduktionsmittel befüllt. Das dritte Tankvolumen wird entweder aus dem ersten Tankvolumen und/oder aus dem mindestens einen zweiten Tankvolumen mit Reduktionsmittel befüllt. Eine derartige Anordnung der Tankvolumina erlaubt es, dass auf zusätzliche Versorgungspumpen verzichtet werden kann und weiter, dass durch lange Fahrten des Kraftfahrzeuges in (schrägen) Zwangslagen eine Mangelbefüllung eines Tankvolumens vermieden wird. Dies wird insbesondere durch die Bereitstellung eines weiteren zweiten Tankvolumens bzw. des dritten Tankvolumens erreicht, wobei die zweiten Tankvolumina untereinander zusätzlich durch eine Sammelleitung zum Ausgleich der zweiten Tankvolumina miteinander verbunden sein können.

Vorzugsweise ist das Kraftfahrzeug derart ausgestaltet, dass ein Dachbereich des Kraftfahrzeuges eine Wärmeisolierung aufweist, so dass zumindest das erste Tankvolumen des Tanks durch die Wärmeisolierung wenigstens teilweise gegenüber der äußeren Umgebung isoliert wird. Die (insbesondere nicht metallische) Wärmeisolierung dient dabei insbesondere dem Schutz des ersten Tankvolumens vor klimatischen Einflüssen der Umgebung, so dass ein Einfrieren des Reduktionsmittels innerhalb des ersten Tankvolumens möglichst vermieden wird, gleichzeitig aber eine Verflüssigung des Reduktionsmittels durch eine nicht vorhandene Wärmeisolierung des ersten Tankvolumens gegenüber dem Kabineninnenraum des Kraftfahrzeuges beschleunigt werden kann.

Die in der Einleitung angeführten Aufgaben werden weiter durch ein Verfahren zum Betrieb einer SCR-Anlage eines Kraftfahrzeuges gelöst, das mindestens einen erfindungsgemäßen Tank, eine Reduktionsmittelzugabeeinrichtung und einen SCR-Katalysator aufweist, wobei die Bevorratung eines Reduktionsmittels für eine SCR-Anlage in einem ersten Tankvolumen erfolgt und während des Betriebes des Kraftfahrzeuges zumindest ein weiteres Tankvolumen selbständig mit dem Reduktionsmittel aus dem ersten Tankvolumen befüllt wird und dieses weitere mindestens eine Tankvolumen ein Reservoir für die Reduktionsmittelzugabeeinrichtung darstellt, wobei insbesondere das Verfahren zum Betrieb eines erfindungsgemäßen Kraftfahrzeuges vorgeschlagen wird.

Auch hier umfasst die Reduktionsmittelzugabeeinrichtung z. B. einen Injektor oder eine Förderpumpe und eine Einspritzdüse zur Abgabe des Reduktionsmittels in die Abgasleitung. Das Verfahren zeichnet sich dadurch aus, dass während des Betriebes des Kraftfahrzeuges das Reduktionsmittel aus einem ersten Tankvolumen in Folge der Schwerkraft in zumindest ein weiteres Tankvolumen gefördert wird, so dass dieses weitere mindestens eine Tankvolumen ein insbesondere ständig gefülltes Reservoir für die Reduktionsmittelzugabeeinrichtung darstellt. Als Reservoir wird damit ein Volumen bezeichnet, das insbesondere bei Zwangslagen des Fahrzeugs und Teilbefüllung der weiteren vorhandenen Tankvolumina ständig gefüllt ist bzw. sich erst nach Entleerung der weiteren Tankvolumina über die Reduktionsmittelzugabeeinrichtung entleeren lässt.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, auf diese jedoch nicht beschränkt sind. Es zeigen schematisch:

Fig. 1: einen Tank;

Fig. 2: ein Fahrzeug mit einem Tank;

Fig. 3: erfindungswesentliche Details eines Kraftfahrzeuges und

Fig. 4: eine weitere Ansicht von erfindungswesentlichen Details eines Kraft- fahrzeuges.

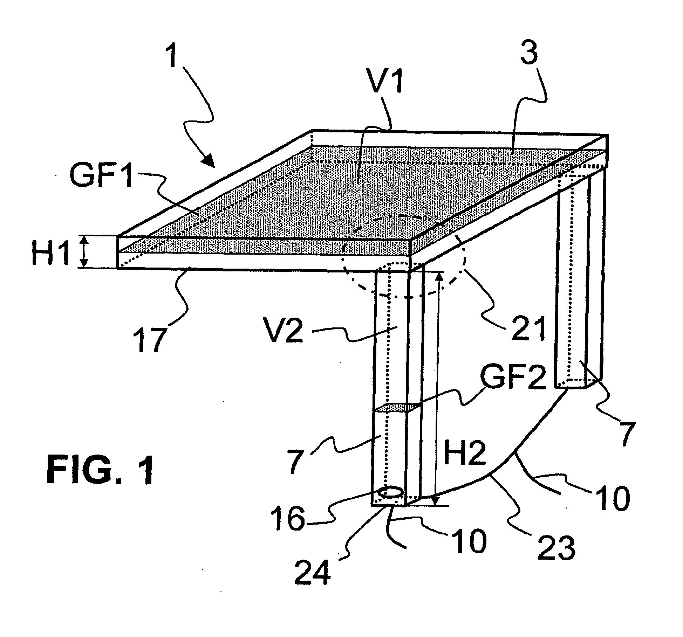

Fig. 1 zeigt schematisch in einer perspektivischen Ansicht einen Tank 1, mit einem Gehäuse 17, mit einer ersten mittleren Grundfläche GF1 und einer ersten Höhe H1 und einem entsprechenden ersten Volumen V1, das mit einem zweiten Tankvolumen 7 mit einer zweiten mittleren Grundfläche GF2, einer zweiten Höhe H2 und einem entsprechenden zweiten Volumen V2, verbunden ist. Das zweite Tankvolumen 7 ist dabei in einem Randbereich 21 des ersten Tankvolumens 3 angeordnet. Der Tank 1 kann dabei auch weitere zweite Tankvolumen 7 aufweisen, die ggf. über eine Sammelleitung 23, die an den dem ersten Tankvolumen 3 abgewandten Ende der zweiten Tankvolumina 7 angeschlossen sind, miteinander verbunden sind. Die Sammelleitung 23, bzw. das mindestens eine zweite Tankvolumen 7 ist über eine Verbindungsleitung 10 mit einer Reduktionsmittelzugabeeinrichtung 13 verbunden, durch die das Reduktionsmittel 2 dem Abgassystem 14 zugeführt wird. Zudem weisen die zweiten Tankvolumina 7 ggf. eine Heizung 16 auf, die bevorzugt im Bereich des Tankauslasses 24 des zweiten Tankvolumens 7 angeordnet ist.

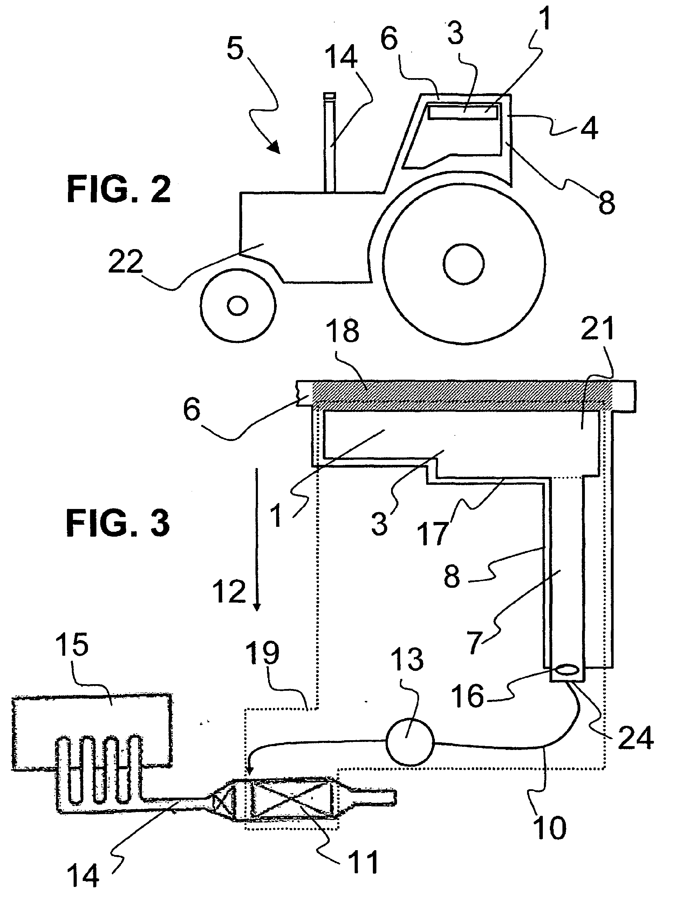

Fig. 2 zeigt schematisch in einer Seitenansicht ein Kraftfahrzeug 5 mit einem Abgassystem 14 und einer Karosserie 22 mit einem Dach 6 und einem Dachholm 8.

Dabei ist ein Tank 1 für ein Reduktionsmittel 2 mit einem ersten Tankvolumen 3 im Dachbereich 4 des Kraftfahrzeuges 5 angeordnet.

Fig. 3 zeigt schematisch erfindungswesentliche Details eines Kraftfahrzeuges 5, insbesondere eine Verbrennungskraftmaschine 15 mit einem angeschlossenen Abgassystem 14, in dem wenigstens ein SCR-Katalysator 11 enthalten ist. Das Reduktionsmittel 2 wird aus einem ersten Tankvolumen 3 eines Tanks 1 und über ein zweites Tankvolumen 7 durch eine Verbindungsleitung 10 einer Reduktionsmittelzugabeeinrichtung 13 zugeführt, die über eine Einspritzung bzw. einen Injektor das Reduktionsmittel 2 dem Abgassystem 14 zuführt. Die SCR-Anlage, gekennzeichnet in Fig. 3 durch die gestrichelte Linie, umfasst in dieser Ausführungsform zumindest die zwei Tankvolumina erstes Tankvolumen 3 und zweites Tankvolumen 7, die Reduktionsmittelzugabeeinrichtung 13 und den SCR-Katalysator 11. Der Tank 1 ist mit einem ersten Tankvolumen 3 im Bereich des Daches 6 angeordnet und insbesondere wenigstens zum Teil in dieses Dach integriert, wobei das Gehäuse 17 des Tanks 1, insbesondere des ersten Tankvolumens 3, durch eine Wärmeisolierung 18 gegenüber der äußeren Umgebung wenigstens teilweise isoliert ist. Das zweite Tankvolumen 7 setzt sich aus einem Randbereich 21 des ersten Tankvolumens 3 entlang eines Dachholmes 8 nach unten fort und weist an seinem unteren Ende einen Tankauslass 24 auf, in dessen Nähe ggf. eine Heizung 16 angeordnet ist.

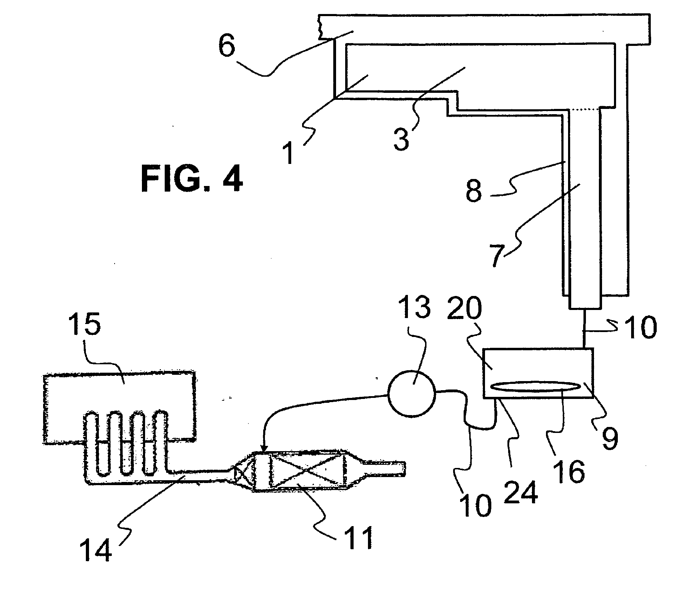

Fig. 4 zeigt schematisch eine weitere Ansicht von erfindungsrelevanten Details eines Kraftfahrzeuges 5. Dabei ist, ähnlich wie in Fig. 3, ein Tank 1 mit einem ersten Tankvolumen 3 in einem Dach 6 eines Kraftfahrzeuges 5 angeordnet und setzt sich mit einem zweiten Tankvolumen 7 entlang eines Dachholmes 8 nach unten fort. Über eine Verbindungsleitung 10 ist das zweite Tankvolumen 7 mit einem dritten Tankvolumen 9 verbunden, das in der Nähe des Tankauslasses 24 innerhalb des dritten Tankvolumens 9 ggf. eine Heizung 16 aufweist. Über eine Reduktionsmittelzugabeeinrichtung 13 wird das Reduktionsmittel 2 aus dem dritten Tankvolumen 9 dem Abgassystem 14 stromaufwärts eines SCR-Katalysators 11 zugegeben. Dabei dient das dritte Tankvolumen 9 hier als Reservoir 20 für die Reduktionszugabeeinrichtung 13, das insbesondere durch Schwerkraft 12 derart mit Reduktionsmittel 2 aus den anderen Tankvolumina (3, 7) versorgt wird, dass alle anderen Tankvolumina (3, 7) vor dem Reservoir 20 entleert sind.

**Bezugszeichenliste**

1 Tank
2 Reduktionsmittel
3 Erstes Tankvolumen
4 Dachbereich
5 Kraftfahrzeug
6 Dach
7 Zweites Tankvolumen
8 Dachholm
9 Drittes Tankvolumen
10 Verbindungsleitung
11 SCR-Katalysator
12 Schwerkraft

13 Reduktionsmittelzugabeeinrichtung
14 Abgassystem
15 Verbrennungskraftmaschine
16 Heizung
17 Gehäuse
18 Wärmeisolierung
19 SCR-Anlage
20 Reservoir
21 Randbereich
22 Karosserie
23 Sammelleitung
24 Tankauslass

H1 erste Höhe
H2 zweite Höhe
GF1 erste mittlere Grundfläche
GF2 zweite mittlere Grundfläche
V1 erstes Volumen
V2 zweites Volumen

**Patentansprüche**

1. Tank (1) für ein Ammoniak bildendes oder Ammoniak umfassendes Reduktionsmittel (2), der an einem Dach (6) eines Kraftfahrzeuges (5) angeordnet werden kann, wobei der Tank (1) ein flächiges erstes Tankvolumen (3)

   - mit einer ersten Höhe (H1) und einer ersten mittleren Grundfläche (GF1), wobei ein erstes Verhältnis GF1H1 größer 500 cm ist, und
   - mit einem erstes Volumen (V1) von wenigstens 90 Litern zur Aufnahme des Reduktionsmittels (2),

   sowie mindestens ein längliches zweites Tankvolumen (7) hat, wobei dieses

   - ein zweiten Höhe (H2) und eine zweiten mittlere Grundfläche (GF2) aufweist,
   - wobei das mindestens eine längliche zweite Tankvolumen (7) zu dem flächigen ersten Tankvolumen (3) hervorstehend ausgebildet ist$_2$
   - ein zweites Volumen (V2) hat, das höchstens 10 % des ersten Volumens (V1) des ersten Tankvolumens (3) umfasst,
   - wobei das mindestens eine zweite Tankvolumen (7) eine Heizung (16) umfasst, und
   - durch Schwerkraft (12) mit Reduktionsmittel aus dem ersten Tankvolumen befüllbar ist.

2. Tank (1) nach Anspruch 1, wobei ein zweites Verhältnis GF2/H2 kleiner als 2 cm ist.

3. Tank (1) nach Anspruch 1 oder 2, wobei das mindestens eine zweite Tankvolumen (7) direkt im Randbereich (21) des ersten Tankvolumens (3) angeordnet ist.

4. Tank (1) nach einem der vorherigen Ansprüche, wobei ein drittes Tankvolumen (9) über eine Verbindungsleitung (10) mit dem ersten Tankvolumen (3) und/oder dem mindestens einen zweiten Tankvolumen (7) verbunden ist.

5. Tank (1) nach Anspruch 4, wobei das dritte Tankvolumen (9) eine Heizung (16) umfasst.

6. Tank (1) nach einem der vorherigen Ansprüche, wobei zumindest das erste Tankvolumen (3) ein Gehäuse (17) aus Kunststoff aufweist.

7. Tank (1) nach einem der vorherigen Ansprüche, wobei zumindest das erste Tankvolumen (3) eine Wärmeisolierung (18) aufweist.

8. Kraftfahrzeug (5) mit einer Verbrennungskraftmaschine (15) und einem Abgassystem (14) sowie einer Karosserie (22) mit einem Dach (6), wobei das Abgassystem (14) einen SCR-Katalysator (11) und eine Reduktionsmittelzugabeeinrichtung (13) hat, und wobei ein Tank (1) gemäß einem der vorhergehenden Ansprüchen mit einem flächigen ersten Tankvolumen (3) für das Reduktionsmittel (2) am Dach (6) vorgesehen ist.

9. Kraftfahrzeug (5) nach Anspruch 8, wobei der Tank (1) ein flächiges erstes Tankvolumen (3) und mindestens ein längliches zweites Tankvolumen (7) aufweist, wobei das mindestens eine längliche zweite Tankvolumen (7) zu dem flächigen ersten Tankvolumen (3) hervorstehend ausgebildet ist, wobei das mindestens eine zweite Tankvolumen (7) entlang eines Dachholmes (8) der Karosserie (22) angeordnet ist.

10. Kraftfahrzeug (5) nach Anspruch 8 oder 9, wobei ein drittes Tankvolumen (9) vorgesehen ist, das über eine Verbindungsleitung (10) mit mindestens einem zweiten Tankvolumen (7) oder dem ersten Tankvolumen (3) verbunden ist und wobei zumindest das erste Tankvolumen (3) über das dritte Tankvolumen (9) mit einer Reduktionsmittelzugabeeinrichtung (13) verbunden ist.

11. Kraftfahrzeug (5) nach einem der Ansprüche 8 bis 10, wobei eine Reduktionsmittelzugabeeinrichtung (13) mit einem durch Schwerkraft (12) befüllbaren mindestens einen zweiten Tankvolumen (7) oder mit einem durch Schwerkraft (12) befüllbaren dritten Tankvolumen (9) verbunden ist.

12. Kraftfahrzeug (5) nach einem der Ansprüche 8 bis 11, wobei ein Dachbereich (4) des Kraftfahrzeuges (5) eine Wärmeisolierung (18) aufweist, so dass zumindest das erste Tankvolumen (3) des Tanks (1) durch die Wärmeisolierung (18) wenigstens teilweise isoliert wird.

13. Verfahren zum Betrieb einer SCR-Anlage (19) eines Kraftfahrzeuges (5), zumindest aufweisend einen Tank (1) nach einem der Ansprüche 1 bis 7, eine Reduktionsmittelzugabeeinrichtung (13) und einen SCR-Katalysator (11), wobei die Bevorratung eines Reduktionsmittels (2) für eine SCR-Anlage (19) in einem ersten Tankvolumen (3) erfolgt und während des Betriebes des Kraftfahrzeuges (5) zumindest ein weiteres Tankvolumen (7, 9) selbstständig mit dem Reduktionsmittel (2) aus dem ersten Tankvolumen (3) durch Schwerkraft befüllt wird und dieses weitere mindestens eine Tankvolumen (7, 9) ein Reservoir (20) für die Reduk, tionsmittelzugabeeinrichtung (13) darstellt und beheizbar ist.

## Claims

1. Tank (1) for a reducing agent (2) forming ammonia or including ammonia, the tank (1) being disposable on a roof (6) of a motor vehicle (5), the tank (1) comprising
a planar first tank volume (3),

   - with a first height (H1) and a first mean base area (GF1), wherein a first ratio (GF1/H1) is greater than 500 cm, and
   - with a first volume (V1) of at least 90 litre for holding the reducing agent (2),

   and
   at least one elongate second tank volume (7), wherein this has

   - a second height (H2) and a second mean base area (GF2),
   - wherein the at least one elongate second tank volume (7) is projecting relative to said planar first tank volume (3),
   - a second volume (V2), which comprises at most 10 % of the first volume (V1) of the first tank volume (3),
   - wherein the at least one second tank volume (7) comprises a heater (16), and
   - can be filled with reducing agent from the first tank volume under gravitational force (12).

2. Tank (1) according to claim 1, wherein a second ratio (GF2/H2) is smaller than 2 cm.

3. Tank (1) according to claim 1 or 2, wherein the at least one second tank volume (7) is disposed directly in an edge region (21) of the first tank volume (3).

**4.** Tank (1) according to one of the preceding claims, wherein a third tank volume (9) is connected by a connecting line (10) with the first tank volume (3) and/or with the at least one second tank volume (7).

**5.** Tank (1) according to claim 4, wherein the third tank volume (9) comprises a heater (16).

**6.** Tank (1) according to one of the preceding claims, wherein at least the first tank volume (3) has a housing (17) composed of plastic material.

**7.** Tank (1) according to one of the preceding claims, wherein at least the first tank volume (3) has a heat insulation (18).

**8.** Motor vehicle (5) comprising an internal combustion engine (15), an exhaust system (14) and a body (22) with a roof (6), wherein the exhaust system (14) comprises an SCR-catalyst (11) and a reducing agent metering device (13), and wherein a tank (1) for the reducing agent (2) according to one of the preceding claims with a planar first tank volume (3) is disposed on the roof (6).

**9.** Motor vehicle (5) according to claim 8, wherein the tank (1) comprises a planar first tank volume (3) and at least one elongate second tank volume (7), wherein the at least one elongate second tank volume (7) is projecting relative to the planar first tank volume (3), wherein the at least one second tank volume (7) is disposed along a roof beam (8) of the body (22).

**10.** Motor vehicle (5) according to claim 8 or 9 comprising a third tank volume (9) which is connected by a connecting line (10) with at least one second tank volume (7) or with the first tank volume (3), wherein at least the first tank volume (3) is connected through the third tank volume (9) to the reducing agent metering device (13).

**11.** Motor vehicle (5) according to one of claims 8 to 10, wherein a reducing agent metering device (13) is connected to at least one second tank volume (7) or with a third tank volume (9), wherein the tank volumes (7, 9) can be filled under gravitational force.

**12.** Motor vehicle (5) according to one of claims 8 to 11, wherein a roof region (4) of the motor vehicle (5) comprises a heat insulation (18), so that at least the first tank volume (3) of the tank (1) is at least partially insulated by the heat insulation (18).

**13.** Method for operating an SCR-system (19) of a motor vehicle (5), comprising at least a tank (1) according to one of claims 1 to 7, a reducing agent metering device (13) and a SCR-catalyst (11), wherein a reducing agent (2) for the SCR-system (19) is stored in a first tank volume (3) and during operation of the motor vehicle (5) at least one additional tank volume (7, 9) is automatically filled with the reducing agent (2) from the first tank volume (3) by gravitational force and wherein the additional at least one tank volume (7, 9) forms a reservoir (20) for the reducing agent metering device (13) and is heatable.

**Revendications**

**1.** Réservoir (1) pour un agent de réduction (2) formant de l'ammoniaque ou comprenant de l'ammoniaque, lequel réservoir (1) peut être agencé sur un toit (6) d'un véhicule automobile (5), le réservoir (1) ayant un premier volume de réservoir (3) de forme plate

- avec une première hauteur (H1) et une première surface de base moyenne (GF1), une première relation GF1/H1 étant plus grande que 500 cm et
- avec un premier volume (V1) d'au moins 90 litres pour recevoir l'agent de réduction (2),

et ainsi
qu'au moins un deuxième volume de réservoir (7) oblong, lequel étant doté

- d'une deuxième hauteur (H2) et d'une deuxième surface de base moyenne (GF2),
- l'au moins un deuxième volume de réservoir (7) oblong étant réalisé de manière à ressortir par rapport au premier volume de réservoir (3) de forme plate,
- et un deuxième volume (V2) qui comprend au maximum 10 % du premier volume (V1) du premier volume de réservoir (3) de forme plate,
- l'au moins un deuxième volume de réservoir (7) comprenant un chauffage (16), et
- pouvant être rempli avec de l'agent de réduction du premier volume de réservoir par la gravité (12).

**2.** Réservoir (1) selon la revendication 1, un deuxième rapport GF2/H2 étant plus petit que 2 cm.

**3.** Réservoir (1) selon la revendication 1 ou 2, l'au moins un deuxième volume de réservoir (7) étant agencé directement dans la région de bord (21) du premier volume de réservoir (3).

**4.** Réservoir (1) selon l'une des revendications précédentes, un troisième volume de réservoir (9) étant relié par l'intermédiaire d'une conduite de connexion (10) avec le premier volume de réservoir (3) et/ou avec l'au moins deuxième volume de réservoir (7).

**5.** Réservoir (1) selon la revendication 4, le troisième volume de réservoir (9) comprenant un chauffage (16).

**6.** Réservoir (1) selon l'une des revendications précédentes, l'au moins premier volume de réservoir (3) étant doté d'un boîtier (17) en matière plastique.

**7.** Réservoir (1) selon l'une des revendications précédentes, du moins le premier volume de réservoir (3) étant doté d'un isolement thermique (18).

**8.** Véhicule automobile (5) avec une machine à combustion interne (15) et avec un système de gaz d'échappement (14) ainsi qu'une carrosserie (22) avec un toit (6), le système de gaz d'échappement (14) étant doté d'un catalyseur SCR (11) et d'une installation de dosage d'agent de réduction (13) et où selon l'une des revendications précédentes un réservoir (1) est doté d'un premier volume de réservoir de forme plate (3) pour l'agent de réduction (2) sur le toit (6).

**9.** Véhicule automobile (5) selon la revendication 8, le réservoir (1) étant doté d'un premier volume de réservoir de forme plate (3) et d'au moins un deuxième volume de réservoir (7) oblong, l'au moins un deuxième volume de réservoir oblong (7) étant réalisé de manière à ressortir par rapport au premier volume de réservoir de forme plate (3), l'au moins un deuxième volume de réservoir (7) étant agencé le long d'un longeron d'un toit (8) de la carrosserie (22).

**10.** Véhicule automobile (5) selon les revendications 8 ou 9, un troisième volume de réservoir (9) étant prévu, qui à l'intermédiaire d'une conduite de connexion (10) est relié à au moins un deuxième volume de réservoir (7) ou au premier volume de réservoir (3) et où au moins le premier volume de réservoir (3) est relié à une installation de dosage d'agent de réduction (13) à l'intermédiaire du troisième volume de réservoir (9).

**11.** Véhicule automobile (5) selon l'une des revendications 8 à 10, une installation de dosage d'agent de réduction (13) étant reliée à au moins un deuxième volume de réservoir (7) pouvant être rempli par la gravité (12) ou à un troisième volume de réservoir (9) pouvant être rempli par la gravité (12).

**12.** Véhicule automobile (5) selon l'une des revendications 8 à 11, une région du toit (4) du véhicule automobile (5) ayant un isolement thermique (18), de sorte qu'au moins le premier volume de réservoir (3) du réservoir (1) est isolé au -moins partiellement par l'isolement thermique (18).

**13.** Procédé destiné à l'opération d'une installation SCR (19) d'un véhicule automobile (5), comportant au moins un réservoir (1) selon l'une des revendications 1 à 7, une installation de dosage d'agent de réduction (13) et un catalyseur SCR (11), l'approvisionnement d'un agent de réduction (2) pour une installation SCR (19) étant effectué dans un premier volume de réservoir (3) et durant l'opération du véhicule automobile (5) au moins un autre volume de réservoir (7, 9) étant rempli indépendamment par la gravité avec l'agent de réduction (2) du premier volume de réservoir (3) et cet autre, au moins un volume de réservoir (7, 9) représente un réservoir (20) pour l'installation de dosage d'agent de réduction (13) et peut être chauffé.

FIG. 1

**FIG. 2**

**FIG. 3**

# FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202006010615 U1